# EUROPEAN PATENT SPECIFICATION

(11) **EP 4 285 568 B1**
(45) Date of publication and mention of the grant of the patent: **04.03.2026**
(21) Application number: 22747821.1
(22) Date of filing: 22.06.2022
(51) Int. Cl.: H04L 65/1016, H04L 65/1069, H04L 65/80, H04W 76/10, H04W 28/02

(54) **ESTABLISHING INTERNET PROTOCOL MULTIMEDIA SUBSYSTEM SERVICES IN A CELLULAR NETWORK**
HERSTELLUNG VON INTERNETPROTOKOLL-MULTIMEDIA-SUBSYSTEMDIENSTEN IN EINEM MOBILFUNKNETZ
ÉTABLISSEMENT DE SERVICES DE SOUS-SYSTÈME MULTIMÉDIA DE PROTOCOLE INTERNET DANS UN RÉSEAU CELLULAIRE

(30) Priority: 22.06.2021 US 202163213387 P
(43) Date of publication of application: 06.12.2023
(73) Proprietor: Google LLC, Mountain View, CA 94043 (US)
(72) Inventor: WU, Chih-Hsiang, Taipei (TW); CHUNG, Chi-Wen, Taipei (TW); CHUEH, Han-Jung, Taipei (TW)
(74) Representative: Collingwood-Pierce, Alexandra Isobel Seymour
(86) International application number: PCT/US2022/034444
(87) International publication number: WO 2022/271772

(56) References cited:
- WO-A1-2017/171920
- WO-A1-2021/223210
- US-A1- 2014 118 462
- US-A1- 2019 166 168
- US-A1- 2020 329 078

## Description

### BACKGROUND

In some instances, a user equipment device (UE) in a cellular network initiates an internet protocol (IP) multimedia subsystem (IMS) service (e.g., IMS voice call initiation or IMS video call initiation) with an IMS network via a radio access network (RAN) and a core network. As part of the IMS service initiation, the UE sends an IMS signaling message, such as a session initiation protocol (SIP) message, including quality of service (QoS) configurations to the IMS network. The IMS signaling message instructs the RAN to configure a dedicated data radio bearer (DRB) for the IMS service. However, for various reasons, the RAN may not configure the dedicated DRB or provide the appropriate QoS configuration for the IMS service. If the RAN does not configure the dedicated DRB or provide the appropriate QoS configuration(s), a no-sound issue can occur, and the UE will drop the IMS service after one or more timers expire. As a result, the UE fails to establish the IMS service with the IMS network resulting in a poor user experience.

US 2020/329078 A1 discloses systems for allocating quality of service (QoS) to real-time communication sessions between user equipment via a communication network are provided. Such systems and methods include identifying an encoding scheme to be used for the communication session, determining a QoS requirement for the communication session based upon the encoding scheme, and determining whether a general communication channel (e.g., a non-GBR channel) of the network meets the QoS requirement. When the general communication channel meets the QoS requirement, a corresponding bearer is used for the communication session. When the general communication channel does not meet the QoS requirement, a bearer associated with a dedicated communication channel (e.g., a GBR channel) is used.

US 2019/166168 A1 discloses a method of signaling a reason for a downgrade of an enhanced call to an audio-only call. User equipment (UE) can engage, via a telecommunication network, in an enhanced call including audio content and additional content. The UE can generate a downgrade message that requests a downgrade of the enhanced call to an audio-only call that includes the audio content without the additional content. The downgrade message can include a downgrade reason indicator identifying whether the UE is automatically downgrading the enhanced call or whether the UE is instead downgrading the enhanced call due to user instructions. The UE can send the downgrade message to the telecommunication network.

US 2014/118462 A1 discloses an apparatus for wireless communication at a first user equipment (UE). The apparatus sends a request to a second UE for establishing a call connection, receives from the second UE an acknowledgment for establishing the call connection, establishes at least one first dedicated bearer between the first UE and a network for communicating media packets with the second UE, sends first dummy data to the second UE via the established at least one first dedicated bearer, receives at least one of second dummy data or a media packet from the second UE via the established at least one first dedicated bearer, and exchanges media packets with the second UE via the established at least one first dedicated bearer after receiving the at least one of the second dummy data or the media packet from the second UE. The first UE and the second UE may each register QoS notification callbacks using requested packet filters and start a WaitForQoS timer.

### SUMMARY OF EMBODIMENTS

The invention is defined by the subject-matter of independent claims 1, 13 and 14, with optional features defined in the dependent claims appended thereto.

In accordance with one aspect, a method at a UE device of a wireless communication system establishes Internet Protocol Multimedia Subsystem (IMS) services. The UE device initiates an IMS service with an IMS network. Responsive to initiating the IMS service, the UE device sends a message to the IMS network specifying one or more preconditions for establishing the IMS service. The UE device selectively transmits one or more service packets for the IMS service over either a dedicated data radio bearer configured for the IMS service or a default data radio bearer based on whether at least one of the one or more preconditions has not been satisfied Selectively transmitting the one or more service packets comprises transmitting the one or more service packets over the dedicated radio bearer responsive to the one or more preconditions having been satisfied, and transmitting the one or more service packets over the default data radio bearer responsive to at least one of the one or more preconditions having not been satisfied.

In at least some embodiments, the one or more preconditions request that a dedicated data radio bearer be configured for the IMS service.

In at least some embodiments, the one or more preconditions further indicate at least one quality of service configuration for the IMS service.

In at least some embodiments, transmitting the one or more service packets for the IMS service over the default data radio bearer includes the following aspects. The UE device determines that the IMS service (706) is a video call using both voice packets and video packets. The UE device transmits the voice packets over the default data radio bearer. The UE device refrains from transmitting the video packets over the default data radio bearer.

In at least some embodiments, the method further comprises the following aspects. The UE device starts one or more timers associated with the at least one of the one or more preconditions. Responsive to expiration of at least one of the one or more timers the IMS service is released. Responsive to determining that at least one of the one or more preconditions has not been satisfied, the UE device stops the one or more timers.

In at least some embodiments, the one or more timers include at least one of a quality of service timer, a media inactivity timer, a dedicated data radio bearer configuration timer, or a combination thereof.

In at least some embodiments, the method further comprises the following aspects. The UE device sets the one or more timers to a first expiration time if the UE device is operating in a first public land mobile network and sets the one or more timers to a second expiration time if the UE device (102) is operating in a second public land mobile network. The second expiration time is different than the first expiration time and the second public land mobile network is different than the first public land mobile network.

In at least some embodiments, determining that at least one of the one or more preconditions has not been satisfied comprises determining that at least one quality of service requirement specified in the one or more preconditions has not been granted. The method further comprises refraining from starting a quality of service timer responsive to determining that the at least one quality of service requirement has not been granted.

In at least some embodiments, the method further comprises the following aspects. The UE device determines that one or more real-time transport packets have not been received over the default radio data bearer within a time threshold. Responsive to determining that the one or more real-time transport packets have not been received over the default radio data bearer within the time threshold, the UE device maintains one or more active timers associated with the at least one of the one or more preconditions.

In at least some embodiments, the method further comprises the following aspects. The UE device determines that one or more real-time transport packets have been received over the default radio data bearer within a time threshold. Responsive to determining that the one or more real-time transport packets having been received over the default radio data bearer within the time threshold, the UE device stops one or more active timers associated with the at least one of the one or more preconditions.

In at least some embodiments, the method further comprises the following aspects. The UE device determines if the UE device is operating within a given public land mobile network. Responsive to determining that the UE device is not operating within the given public land mobile network, the UE device maintains one or more active timers associated with the at least one of the one or more preconditions.

In at least some embodiments, the method further comprises the following aspects. The UE device determines if the UE device is operating within a given public land mobile network. Responsive to determining that the UE device operating within the given public land mobile network, the UE device stops one or more active timers associated with the at least one of the one or more preconditions.

In accordance with another aspect, a user equipment device includes one or more radio frequency (RF) modems configured to wirelessly communicate with at least one network. One or more processors are coupled to the one or more RF modems. At least one memory stores executable instructions. The executable instructions are configured to manipulate at least one of the one or more processors or the one or more RF modems to perform any of the method operations described herein.

In accordance with yet another aspect, a computer-readable storage medium embodies a set of executable instructions. The set of executable instructions is to manipulate a user equipment device to perform any of the method operations described herein.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a diagram illustrating an example wireless system employing a UE configured to mitigate issues resulting from a RAN failing to configure a dedicated DRB or appropriate QoS for an IMS service in accordance with some embodiments.
FIG. 2 is a block diagram illustrating example modes of an IMS service issue mitigation mechanism employed by the UE device of FIG. 1 in accordance with some embodiments.
FIG. 3 is a diagram illustrating example hardware configuration of a user equipment of the wireless system of FIG. 1 in accordance with some embodiments.
FIG. 4 illustrates a diagram of an example method of implementing IMS service issue mitigation at a UE device in accordance with some embodiments.
FIG. 5 illustrates a diagram of another example method of implementing IMS service issue mitigation at a UE device in accordance with some embodiments.
FIG. 6 illustrates a diagram of yet another example method of implementing IMS service issue mitigation at a UE device in accordance with some embodiments.
FIG. 7 is a ladder signaling diagram for implementing IMS service issue mitigation at a UE device and illustrates example operations of the methods of FIG. 4 to FIG. 6 in accordance with some embodiments.
FIG. 8 is another ladder signaling diagram for implementing a different configuration of the IMS service issue mitigation implementation illustrated in the transactional diagram of FIG. 7 in accordance with some embodiments.
FIG. 9 is yet another ladder signaling diagram for implementing yet another configuration of the IMS service issue mitigation implementation illustrated in the transactional diagram of FIG. 7 in accordance with some embodiments.

### DETAILED DESCRIPTION

The following describes embodiments of systems and methods for a UE to mitigate issues resulting from a RAN failing to configure a dedicated DRB or appropriate QoS for an IMS service. As described below, a UE connects to a RAN and initiates an IMS service (e.g., IMS voice call initiation or IMS video call initiation) with an IMS network. The UE initiates the IMS service by sending a SIP INVITE request/message over a default DRB to request configuration of a dedicated DRB for the IMS service. In some instances, the UE registers with the IMS network through the RAN and a core network (CN) before sending the SIP INVITE request. The SIP INVITE request includes session description protocol (SDP) content specifying a precondition, such as a requested QoS requirement. The QoS requirement includes a current status and a desired status. In one or more embodiments, the SDP content also includes a parameter indicating the IMS network is to send an acknowledgment message.

The UE receives a SIP message (e.g., an acknowledgment message) from the IMS network in response to sending the SIP INVITE request. The SIP message indicates that the requested IMS service has been established. The UE determines that a dedicated DRB has not been configured for the IMS service and disables one or more timers (e.g., a QoS timer, a Media Inactivity timer, an INVITE timer, a dedicated DRB configuration timer, etc.). Disabling the one or more timers prevents the IMS service from being dropped due to the timer(s) expiring when the dedicated DRB is not configured. The UE proceeds to transmit and receive IMS service packets over the default DRB. The UE or IMS network releases the call using typical mechanisms after the IMS session has ended.

For ease of illustration, the following techniques are described in an example context in which one or more UE devices and one or more RANs implement at least a Fifth Generation (5G) New Radio (NR) standard (e.g., Third Generation Partnership Project (3GPP) Release 15, 3GPP Release 16, etc.) (hereinafter, "5G NR" or "5G NR standard"). However, it should be understood that the present disclosure is not limited to networks employing a 5G NR RAT configuration, but rather the techniques described herein can be applied to any combination of different RATs employed at the UE devices and the RANs. It should also be understood that the present disclosure is not limited to any specific network configurations or architectures described herein for implementing radio link failure detection at the UE. Instead, techniques described herein can be applied to any configuration of RANs. Also, the present disclosure is not limited to the examples and context described herein, but rather the techniques described herein can be applied to any network environment where a UE device implements techniques for mitigating issues resulting from a RAN failing to configure a dedicated DRB or appropriate QoS for an IMS service.

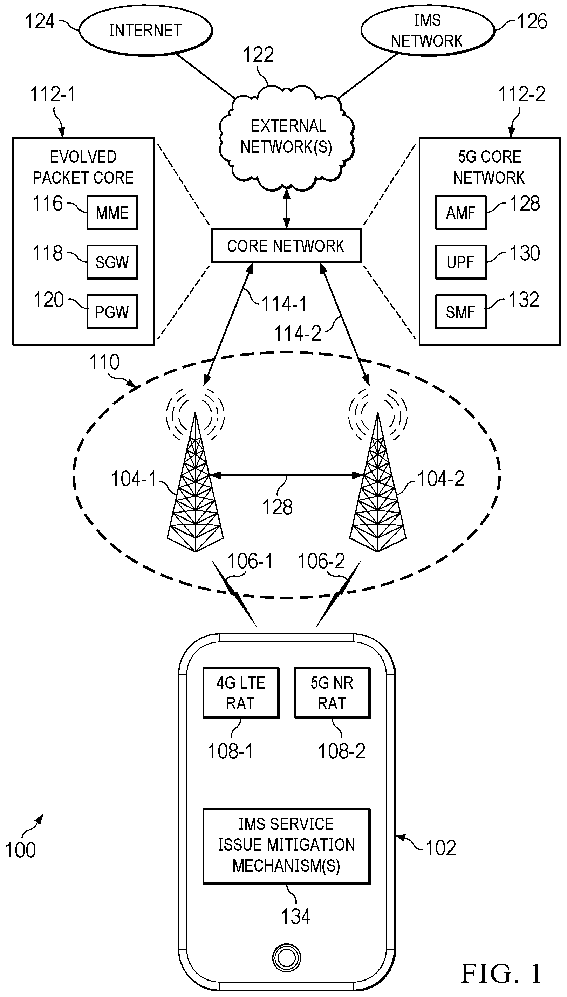

FIG. 1 illustrates a mobile cellular network (system) 100 in accordance with at least some embodiments. As shown, the mobile cellular network 100 includes a user equipment (UE) device 102 that is configured to communicate with one or more base stations (BSs) 104 (illustrated as BS 104-1 and BS 104-2) through one or more wireless communication links 106 (illustrated as wireless links 106-1 and 106-2). The UE device 102, in at least some embodiments, includes any of a variety of wireless communication devices, such as a cellular phone, a cellular-enabled tablet computer or cellular-enabled notebook computer, a cellular-enabled wearable device, an automobile, or other vehicle employing cellular services (e.g., for navigation, provision of entertainment services, in-vehicle mobile hotspots, etc.), and so on. In at least some embodiments, the UE device 102 employs a single RAT 108. In other embodiments, the UE device 102 is a multi-mode UE device that employs multiple RATs 108 (illustrated as RAT 108-1 and RAT 108-2). Examples of multiple RATs include a 3GPP Long-Term Evolution (3GPP LTE) RAT 108-1 and a 3GPP Fifth Generation New Radio (5G NR) RAT 108-2.

In at least some embodiments, the BSs 104 are implemented in a macrocell, microcell, small cell, picocell, and the like, or any combination thereof. Examples of base stations 104 include an Evolved Universal Terrestrial Radio Access Network Node B (E-UTRAN Node B), Evolved Node B (eNodeB or eNB), Next Generation (NG or NGEN) Node B (gNode B or gNB), and so on. The BSs 104 communicate with the UE device 102 via the wireless links 106, which are implemented using any suitable type of wireless link. The wireless links 106, in at least some embodiments, include a downlink of data and control information communicated from the base stations 104 to the UE device 102, an uplink of data and control information communicated from the UE device 102 to the BSs 104, or both. The wireless links 106 (or bearers), in at least some embodiments, are implemented using any suitable communication protocol or standard, or combination of communication protocols or standards, such as 3GPP 4G LTE, 5G NR, and so on. In at least some embodiments, multiple wireless links 106 are aggregated in a carrier aggregation to provide a higher data rate for the UE device 102. Also, multiple wireless links 106 from multiple base stations 104 are configured, in at least some embodiments, for coordinated multipoint (CoMP) communication with the UE device 102, as well as dual connectivity, such as single-RAT LTE-LTE or NR-NR dual connectivity, or multi-radio access technology (Multi-RAT) dual connectivity (MR-DC) including E-UTRA-NR dual connectivity (EN-DC), NGEN radio access network (RAN) E-UTRA-NR dual connectivity (NGEN-DC), and NR E-UTRA dual connectivity (NE-DC).

The BSs 104 collectively form a Radio Access Network (RAN) 110, such as an E-UTRAN or 5G NR RAN. The base stations 104 are connected to a core network (CN) 112 (illustrated as CN 112-1 and CN 112-2) via control-plane and user-plane interfaces through one or more links 114 (illustrated as link 114-1 and link 114-2). Depending on the configuration of the mobile cellular network 100, the core network 112 is either an Evolved Packet Core (EPC) network 112-1 or a 5G Core Network (5GC) 112-2. For example, in an E-UTRAN configuration or a 5G non-standalone (NSA) EN-DC configuration, the core network 112 is an EPC network 112-1 that includes, for example, a mobility management entity (MME) 116, a serving gateway (SGW) 118, and a packet data network gateway (PGW) 120. The MME 116 provides control-plane functions, such as registration and authentication of multiple UE devices 102, authorization, mobility management, and so on. The SGW 118 transfers user-plane packets related to audio calls, video calls, Internet traffic, and the like. The PGW 120 provides connectivity from the UE device 102 to external packet data networks 122, such as the Internet 124 and an IMS network 126, by being the point of exit and entry of traffic for the UE device 102. In a 5G standalone (SA) configuration or an NSA NE-DC or NGEN-DC configuration, the core network 112 is a 5GC network 112-2. The 5GC 112-2 includes, for example, an access and mobility management function (AMF) 128 and a user plane function (UPF) 130, and a session management function (SMF) 132. The AMF 128 provides control-plane functions such as registration and authentication of multiple UE devices 102, authorization, mobility management, and so on. The UPF 130 transfers user-plane packets related to audio calls, video calls, Internet traffic, and the like. The SMF 132 manages protocol data unit (PDU) sessions.

In one or more embodiments, the UE device 102 uses one or more radio bearers, such as data radio bearers (DRBs) and signal radio bearers (SRBs), to communicate with the BS 104. The UE device 102, in one or more embodiments, receives a radio bearer configuration configuring the radio bearer from the BS 104. The UE device 102 and the BS 104 use SRBs to exchange radio resource control (RRC) messages and non-access stratum (NAS) messages and use DRBs to transport data on a user plane. The UE device 102, in one or more embodiments, uses several types of SRBs and DRBs. For example, SRB1 resources carry RRC messages and, in some instances, include NAS messages over the dedicated control channel (DCCH). SRB2 resources support RRC messages that include logged measurement information or NAS messages over the DCCH but with lower priority than SRB1 resources. More generally, SRB1 and SRB2 resources allow the UE device 102 and a master node (MN), such as base station 104-1, to exchange RRC messages related to the MN and embed RRC messages related to a secondary node (SN), such as base station 104-2. SRB1 and SRB2 are also to as master cell group (MCG) SRBs. SRB3 resources allow the UE device 102 and the SN to exchange RRC messages related to the SN and are also referred to as secondary cell group (SCG) SRBs. Split SRBs allow the UE device 102 to exchange RRC messages directly with the MN via lower layer resources of the MN and the SN. Further, DRBs terminated at the MN and using the lower-layer resources of only the MN are referred as MCG DRBs. DRBs terminated at the SN and using the lower-layer resources of only the SN can be referred as SCG DRBs. DRBs terminated at the MN or SN but using the lower-layer resources of both the MN and the SN are referred to as split DRBs. DRBs terminated at the MN but using the lower-layer resources of only the SN are referred to as MN-terminated SCG DRBs. DRBs terminated at the SN but using the lower-layer resources of only the MN are referred to as SN-terminated MCG DRBs.

In one or more embodiments, the core network 112 communicatively couples the UE device 102 to an IMS network 126 via the RAN 110. The IMS network 126 provides various IMS services to the UE device 102, such as IMS short messages, IMS unstructured supplementary service data (USSD), IMS value added service data, IMS supplementary service data, IMS voice calls, and IMS video calls. To this end, an entity (e.g., a server or a group of servers) operating in the IMS network 126 supports packet exchange with the UE device 102. The packets convey signaling (such as session initiation protocol (SIP) messages, IP messages, or other suitable messages) as well as data (or media), such as voice or video. For example, during IMS service initiation, the UE device 102 sends an IMS signaling message, such as a SIP message, to the IMS network 126 that includes particular quality of QoS configurations that require the RAN 110 to configure a dedicated bearer for the IMS service. In many instances the RAN 110 does not configure the dedicated bearer for the IMS service. In these situations, a conventionally configured UE typically releases the IMS service resulting in the conventionally configured UE failing to establish the IMS service with the IMS network 126.

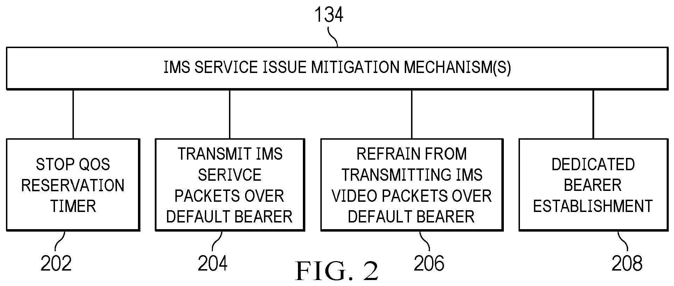

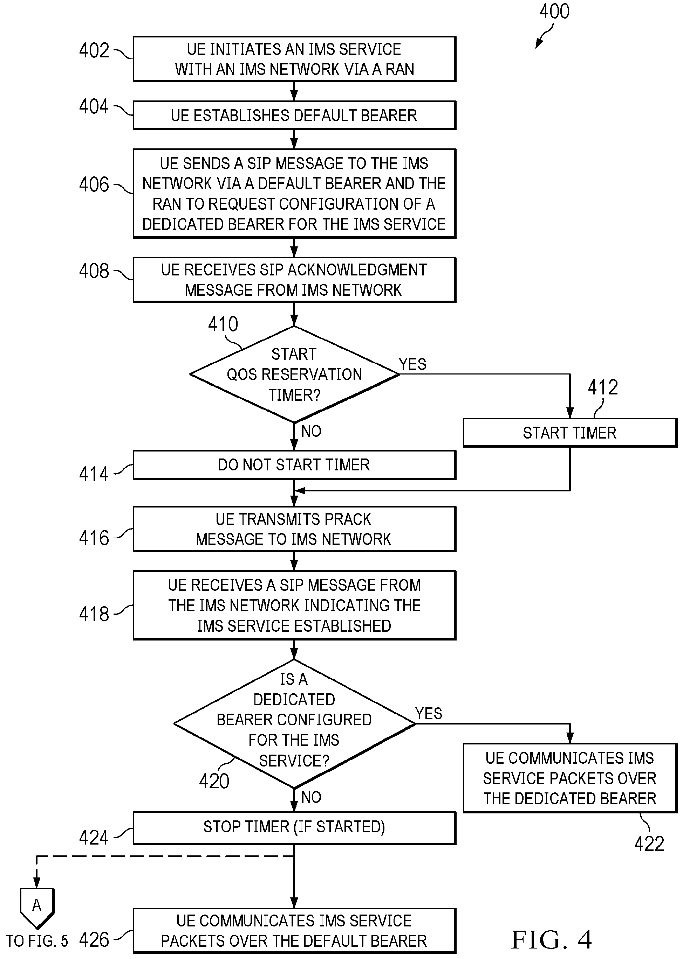

However, the UE device 102 of one or more embodiments employs at least one IMS service issue mitigation mechanism 134 to mitigate issues resulting from the RAN 110 failing to configure a dedicated DRB or appropriate QoS for an IMS service. The IMS service issue mitigation mechanism 134 includes one or more modes or operations that allow the UE device 102 to maintain an IMS service even though the RAN 110 fails to configure a dedicated DRB or appropriate QoS for the IMS service. For example, FIG. 2 illustrates various example modes employed singularly or in various combinations by the UE device 102 as part of the IMS service issue mitigation mechanism 134 in accordance with one or more embodiments. Each of these modes is discussed in greater detail below with respect to FIGs. 4 to 9. One such mode includes a first IMS service issue mitigation mode 202. During this mode, the IMS service issue mitigation mechanism 134 stops a currently executing QoS reservation timer. In more detail, the UE device 102, in one or more embodiments, initializes a QoS reservation timer in response to receiving, for example, a 183 SESSION PROGRESS message from the IMS network 126. The UE device 102 (or the RAN 110) typically uses the QoS reservation timer to determine when to release the IMS service. For example, if a precondition is not met, such as a media dedicated QoS bearer not being available, being incorrect, or not being set by the RAN 110, the QoS timer expires. Upon expiration of the QoS timer, the UE device 102 (or RAN 110) releases the IMS service by sending a SIP CANCEL/BYE message to the IMS network 126. Stated differently, the UE device 102 fails to establish the IMS service with the IMS network 126 resulting in a poor user experience. However, by stopping the QoS reservation timer prior to expiration, the UE device 102 prevents the release of the IMS service when the precondition is not met. In other embodiments, the UE device 102 does not start the QoS reservation timer if the QoS parameters requested by the UE device 102 are not granted.

Another mode includes a second IMS service issue mitigation mode 204. During this mode, the IMS service issue mitigation mechanism 134 transmits IMS service packets over the default bearer when the desired QoS configurations have not been granted by the IMS network 126 or a dedicated bearer for the IMS service has not been provided to the UE device 102 by the RAN 110. Yet another mode includes a third IMS service issue mitigation mode 206. During this mode, the IMS service issue mitigation mechanism 134 refrains from transmitting IMS video packets over the default bearer. An additional mode includes a fourth IMS service issue mitigation mode 208. During this mode, the IMS service issue mitigation mechanism 134 establishes a dedicated bearer with the RAN 110 subsequent to transmitting IMS service packets over the default bearer. Once the dedicated bearer is established, the UE device 102 begins transmitting the IMS service packets over the dedicated bearer instead of the default bearer. Although the techniques of described herein reference the IMS network 126, these techniques are also applicable to other networks that provide packet-based calls.

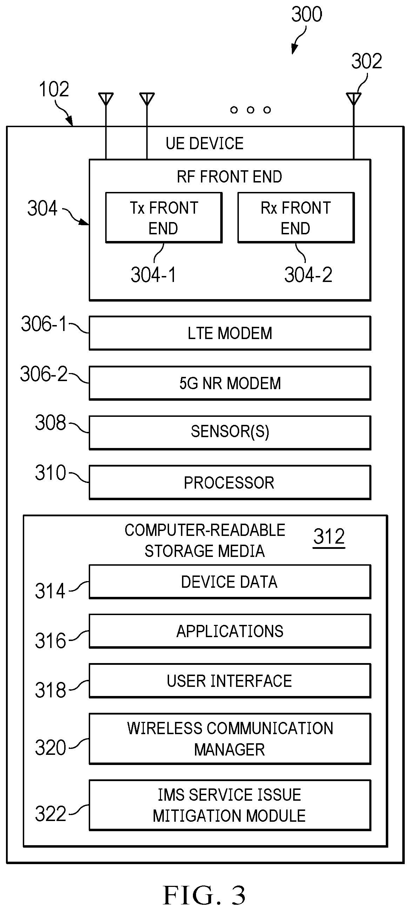

FIG. 3 illustrates an example device diagram 300 of a UE device 102. In at least some embodiments, the device diagram 300 describes a UE device that implements various aspects of mitigating issues resulting from the RAN 110 failing to configure a dedicated DRB or appropriate QoS for an IMS service. The UE device 102 may include additional functions and interfaces that are omitted from FIG. 3 for the sake of clarity. The UE device 102, in at least some embodiments, includes antennas 302, a radio frequency (RF) front end 304, and one or more RF transceivers 306 (e.g., a 3GPP 4G LTE transceiver 306-1 and a 5G NR transceiver 306-2) for communicating with one or more base stations 104 in a RAN 110, such as a 5G RAN, an E-UTRAN, a combination thereof, and so on. The RF front end 304, in at least some embodiments, includes a transmitting (Tx) front end 304-1 and a receiving (Rx) front end 304-2. The Tx front end 304-1 includes components such as one or more power amplifiers (PA), drivers, mixers, filters, and so on. The Rx front end 304-2 includes components such as low-noise amplifiers (LNAs), mixers, filters, and so on. The RF front end 304, in at least some embodiments, couples or connects the one or more transceivers 306, such as the LTE transceiver 306-1 and the 5G NR transceiver 306-2, to the antennas 302 to facilitate various types of wireless communication.

In at least some embodiments, the antennas 302 of the UE device 102 include an array of multiple antennas configured similar to or different from each other. The antennas 302 and the RF front end 304, in at least some embodiments, are tuned to or are tunable to one or more frequency bands, such as those defined by the 3GPP LTE, 3GPP 5G NR, IEEE wireless local area network (WLAN), IEEE wireless metropolitan area network (WMAN), or other communication standards. In at least some embodiments, the antennas 302, the RF front end 304, the LTE transceiver 306-1, and the 5G NR transceiver 306-2 are configured to support beamforming (e.g., analog, digital, or hybrid) or in-phase and quadrature (I/Q) operations (e.g., I/Q modulation or demodulation operations) for the transmission and reception of communications with one or more base stations 104. By way of example, the antennas 302 and the RF front end 304 operate in sub-gigahertz bands, sub-6 GHz bands, above 6 GHz bands, or a combination of these bands defined by the 3GPP LTE, 3GPP 5G NR, or other communication standards.

In at least some embodiments, the antennas 302 include one or more receiving antennas positioned in a one-dimensional shape (e.g., a line) or a two-dimensional shape (e.g., a triangle, a rectangle, or an L-shape) for implementations that include three or more receiving antenna elements. While the one-dimensional shape enables the measurement of one angular dimension (e.g., an azimuth or an elevation), the two-dimensional shape enables two angular dimensions to be measured (e.g., both azimuth and elevation). Using at least a portion of the antennas 302, the UE device 102 can form beams that are steered or un-steered, wide or narrow, or shaped (e.g., as a hemisphere, cube, fan, cone, or cylinder). The one or more transmitting antennas may have an un-steered omnidirectional radiation pattern or may produce a wide steerable beam. Either of these techniques enables the UE device 102 to transmit a radio signal to illuminate a large volume of space. In some embodiments, the receiving antennas generate thousands of narrow steered beams (e.g., 2000 beams, 4000 beams, or 6000 beams) with digital beamforming to achieve desired levels of angular accuracy and angular resolution.

The UE device 102, in at least some embodiments, includes one or more sensors 308 implemented to detect various properties such as one or more of temperature, supplied power, power usage, battery state, or the like. Examples of sensors include a thermal sensor, a battery sensor, a power usage sensor, and so on.

The UE device 102 also includes at least one processor 310. The processor 310, in at least some embodiments, is a single-core processor or a multiple-core processor composed of a variety of materials, such as silicon, polysilicon, high-K dielectric, copper, and so on. In at least some embodiments, the processor 310 is implemented at least partially in hardware including, for example, components of an integrated circuit or a system-on-a-chip (SoC), a digital-signal-processor (DSP), an application-specific integrated circuit (ASIC), a field-programmable gate array (FPGA), a complex programmable logic device (CPLD), other implementations in silicon or other hardware, or a combination thereof.

Examples of the processor(s) 310 include a communication processor, an application processor, microprocessors, DSPs, controllers, and so on. A communication processor, in at least some embodiments, is implemented as a modem baseband processor, software-defined radio module, configurable modem (e.g., multi-mode, multi-band modem), wireless data interface, wireless modem, or so on. In at least some embodiments, a communication processor supports one or more of data access, messaging, or data-based services of a wireless network, as well as various audio-based communication (e.g., voice calls). An application processor, in at least some embodiments, provides computing resources to applications executing on the UE device 102. For example, an application provides a self-contained operating environment that delivers system capabilities (e.g., graphics processing, memory management, and multimedia processing) to support applications executing on the UE device 102.

The UE device 102 further includes a non-transitory computer-readable storage media 312 (CRM 312). The computer-readable storage media described herein excludes propagating signals. The CRM 312, in at least some embodiments, includes any suitable memory or storage device such as random-access memory (RAM), static RAM (SRAM), dynamic RAM (DRAM), non-volatile RAM (NVRAM), read-only memory (ROM), or Flash memory useable to store device data 314 of the UE device 102. In at least some embodiments, the device data 314 includes user data, multimedia data, beamforming codebooks, applications 316, a user interface(s) 318, an operating system of the UE device 102, and so on, which are executable by the processor(s) 310 to enable user-plane communication, control-plane signaling, and user interaction with the UE device 102. The user interface 318, in at least one embodiment, is configured to receive inputs from a user of the UE device 102, such as to receive input from a user that defines and or facilitates one or more aspects of adverse radio link condition detection. In at least some embodiments, the user interface 318 includes a graphical user interface (GUI) that receives the input information via a touch input. In other instances, the user interface 318 includes an intelligent assistant that receives the input information via an audible input or speech. Alternatively, or additionally, the operating system of the UE device 102 is maintained as firmware or an application on the CRM 312 and executed by the processor(s) 310.

The CRM 312, in at least some embodiments, also includes either or both of a communication manager 320 and an IMS service issue mitigation module 322. Alternatively, or additionally, either or both of the communication manager 320 and the IMS service issue mitigation module 322, in at least some embodiments, are implemented in whole or part as hardware logic or circuitry integrated with or separate from other components of the UE device 102. In at least some embodiments, the communication manager 320 configures the RF front end 304, the LTE transceiver (modem) 306-1, the 5G NR transceiver (modem) 306-2, or a combination thereof, to perform one or more wireless communication operations.

The IMS service issue mitigation module 322, in at least some embodiments, implements the IMS service issue mitigation(s) 134 for mitigating issues resulting from the RAN 110 failing to configure a dedicated DRB or appropriate QoS for an IMS service. For example, the IMS service issue mitigation module 322 is configured to perform in one or more modes including the first mode 202 in which the QoS reservation time is stopped, the second mode 204 in which IMS service packets are transmitted over the default bearer, the third mode in which IMS voice packets are refrained from being transmitted over the default bear, or the fourth mode 208 in which a dedicated bearer is established.

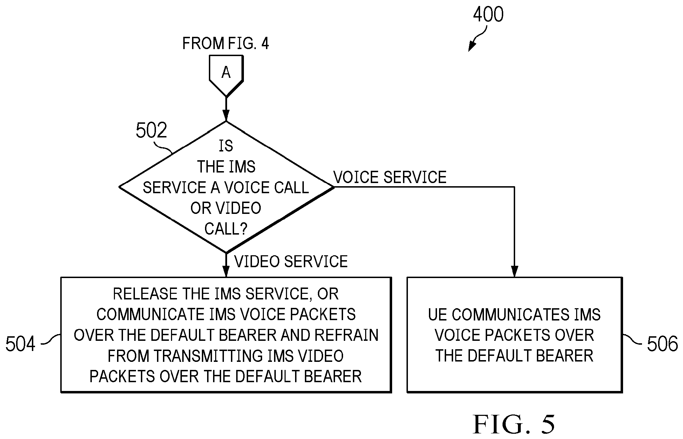

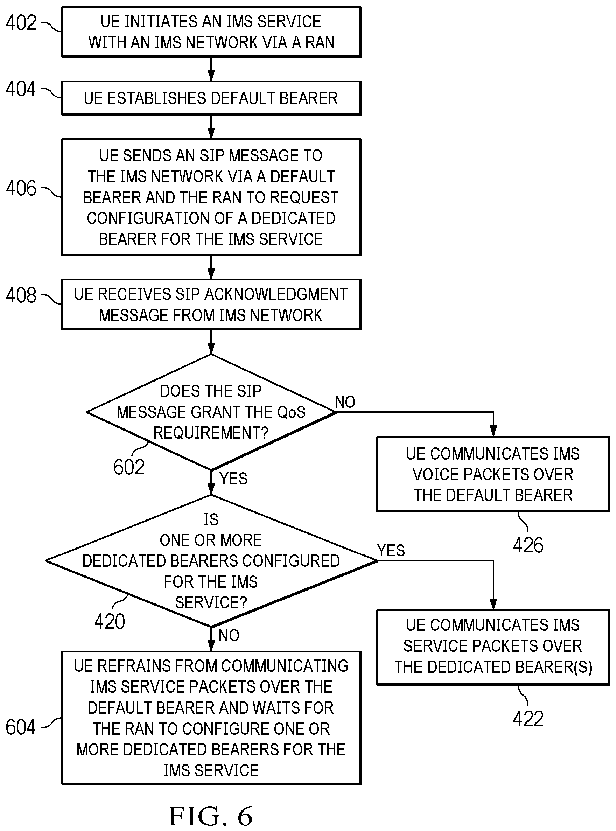

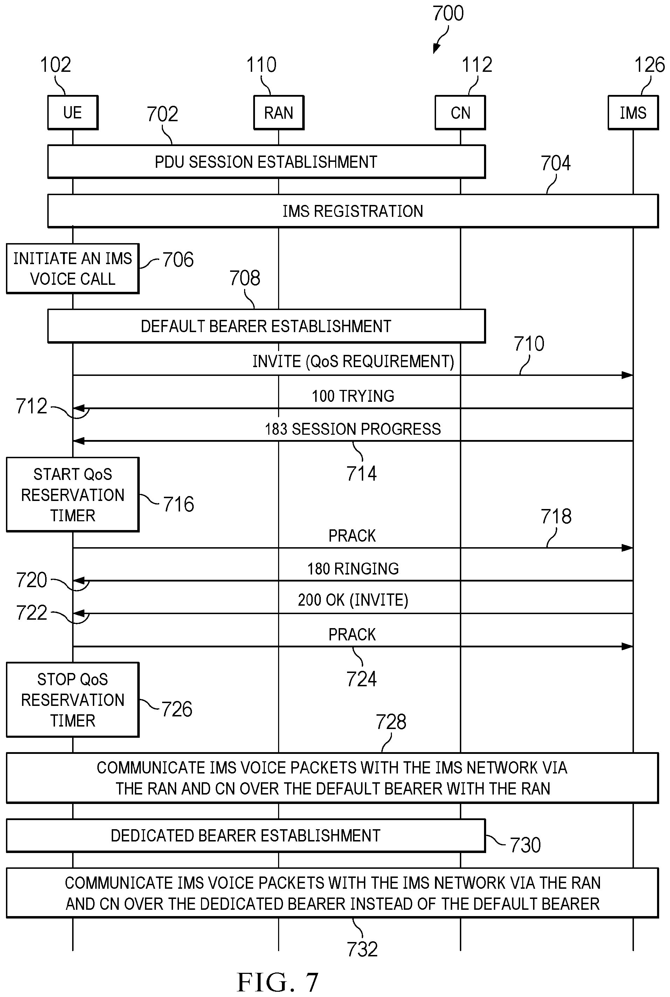

FIG. 4 illustrates an example method 400 for mitigating issues resulting from the RAN 110 failing to configure a dedicated DRB or appropriate QoS for an IMS service in accordance with one or more embodiments. FIG. 5 and FIG. 6 each illustrate a different configuration of the example method 400 of FIG. 4. For ease of discussion, the processes of method 400 are described with reference to the example ladder signaling diagrams 700 to 900 of FIG. 7 to FIG. 9. It is understood that although the techniques described herein are with respect to a mobile originating (MO) UE, the techniques are also applicable to a mobile terminating (MT) UE.

In one or more embodiments, method 400 initiates at block 402 with the UE device 102, in an MO scenario, initiating an IMS service with the IMS network 126 via the RAN 110. As part of initiating the IMS service, the UE device 102, in one or more embodiments, initially performs a PDU Session Establishment procedure 702 (FIG. 7) with the CN 112 via the RAN 110 to establish a PDU Session for a packet-based service (e.g., the IMS service). For example, the UE device 102 sends a PDU Session Establishment Request message for establishing the PDU Session to the CN 112, and the CN 112 sends a PDU Session Establishment Accept message to the UE device 102 via the RAN 110 in response. After establishing the PDU Session, the UE device 102 performs a registration procedure 704 (FIG. 7) with the IMS network 126 via the RAN 110 and CN 112 to register with the IMS network 126. For example, the UE device 102 sends a first SIP message (e.g., REGISTER message) to the IMS network 126 via the RAN 110 and CN 112 to perform the IMS registration procedure 704. In response, the IMS network 126 sends a second SIP message (e.g., 200 OK) to the UE device 102 via the RAN 110 and CN 112 to accept the registration. After successfully registering to the IMS network 126, the UE device 102 initiates an MO IMS service 706 (FIG. 7) with the IMS network 126 via a source BS 104 and the CN 112 (e.g., through the UPF 130). Alternatively, the IMS network 126 initiates an MT service with the UE device 102 via the RAN 110 and CN 112 (e.g., through the UPF 130). After registering to the IMS network 126, the UE device 102 can initiate an IMS service, such as a voice call or video call.

At block 404, in response to the initiation, the UE performs 102 a default DRB establishment procedure 708 (FIG. 7) with the RAN 110 and the CN 112 in situations where the UE device 102 does not already have a default DRB configured for the PDU Session. When the UE device 102 already has a default DRB configured for the PDU Session, the UE device 102 does not perform the default DRB establishment procedure 708. In one example, the UE device 102 sends a Service Request message to the CN 112 (e.g., AMF 128) via the RAN 110 to initiate the default DRB establishment procedure 708. If the UE device 102 is in an RRC_IDLE state with the RAN 110, the UE device 102 performs an RRC connection establishment procedure with the RAN 110 to establish an RRC connection (e.g., an SRB) with the RAN 110. The UE device 102 transmits the Service Request message over the RRC connection to the RAN 110, which sends the Service Request message to the CN 112. After establishing the RRC connection, the RAN 110 performs an initial security activation procedure with the UE device 102 to activate security protections. In such a case, the UE device 102 applies the security protection (e.g., integrity protection, encryption, and the like) to the Service Request message or an RRC container message (e.g., ULInformationTransfer message), including the Service Request message. The UE device 102 then transmits the security-protected Service Request message or RRC container message to the RAN 110. The RAN 110 applies security function(s) (e.g., decryption, integrity check, and so on) to the security-protected Service Request message or RRC container message to obtain the original Service Request message.

After obtaining the Service Request message, the RAN 110 sends the Service Request message to the CN 112. If the UE device 102 is in an RRC_INACTIVE state with the RAN 110, the UE device 102 performs an RRC connection resume procedure with the RAN 110 to resume suspended SRB(s) with the RAN 110. In the RRC connection resume procedure, the UE device 102 transmits an RRCResumeRequest message to the RAN 110 and the RAN 110 transmits an RRCResume message to the UE device 102 in response. In response to the RRCResume message, the UE device 102 resumes the suspended SRB(s), transitions to an RRC_CONNECTED state, and transmits an RRCResumeComplete message. In some instances, the UE device 102 transmits the Service Request message over the resumed SRB to the RAN 110, which sends the Service Request message to the CN 112. For example, the UE device 102 includes the Service Request message in the RRCResuemComplete message. In another example, the UE device 102 transmits the Service Request message over the SRB to the RAN 110 after transmitting the RRCResuemComplete message. In a further example, the UE device 102 in the RRC_INACTIVE state suspends the default DRB with the RAN 110 and resumes the default DRB with the RAN 110 in response to the RRCResume message. In such instances, the UE device 102 refrains from transmitting a Service Request message. If the UE device 102 is in an RRC_CONNECTED state with the RAN 110, the UE device 102 directly transmits the Service Request message via an SRB (i.e., existing and active SRB) to the RAN 110, which in turn sends the Service Request message to the CN 112.

In response to or after receiving the Service Request message, the CN 112 sends a CN-to-BS interface message (e.g., PDU SESSION RESOURCE SETUP REQUEST message or E-RAB SETUP REQUEST message) to the RAN 110 to request that the RAN 110 configures a default DRB for the UE device 102. In response to or after receiving the CN-to-BS interface message, the RAN 110 transmits a (first) RRC reconfiguration message (e.g., an RRCReconfiguration or RRCConnectionReconfiguration message) to the UE device 102. The RRC reconfiguration message includes a first DRB configuration (e.g., a DRB-ToAddMod information element) to configure a default DRB for the UE device 102. The UE device 102 configures the default DRB in accordance with the first DRB configuration. In response, the UE device 102 transmits a (first) RRC reconfiguration complete message (e.g., an RRCReconfigurationComplete or RRCConnectionReconfigurationComplete message) to the RAN 110. In another example, the RAN 110 sends a BS-to-CN interface message (e.g., PDU SESSION RESOURCE SETUP RESPONSE message or E-RAB SETUP RESPONSE message) to the CN 112 in response to the CN-to-BS interface message.

At block 406, after configuring the default DRB, the UE device 102 sends a SIP message, which can include desired QoS configurations, to the IMS network 126 via the default DRB and the RAN 110 / CN 112 requesting configuration of a dedicated DRB for the IMS service 706. For example, the UE device 102 sends a SIP INVITE 710 message (FIG. 7) via the RAN 110 and CN 112 to the IMS network 126 to initiate the IMS service (e.g., voice call or video call) 706. The UE device 102 includes a QoS requirement description (e.g., precondition) in the INVITE message 710. The UE device 102 sends the INVITE message 710 over the default DRB to the RAN 110. In one or more embodiments, the QoS settings requested by the UE device 102 are indicated in the QoS requirement description. In one example, the QoS requirement description includes an SDP parameter such as "Require: precondition". The QoS requirement description, in one or more embodiments, also includes other SDP parameters, such as "a=curr.qos local sendrecv", "a=curr.qos remote none", "a=des.qos mandatory local sendrecv", "a=des.qos mandatory remote sendrecv", and so on. The INVITE message 710, in one or more embodiments, also includes various parameters, such as "Supported: 100rel", to request that the IMS network 126 sends an acknowledge message. In some instances, the UE device 102 starts an INVITE to dedicated bearer/flow timer after the INVITE message is sent. The INVITE timer typically expires after a given amount of time has elapsed without a dedicated bearer being configured for the IMS service 706. If the INVITE timer expires, the IMS service 706 is typically dropped.

At block 408, responsive to sending the INVITE message 710, the UE device 102 receives a SIP acknowledgment message from the IMS network 126. For example, after receiving the INVITE message 710, the IMS network 126 sends a 100 TRYING message 712 (FIG. 7) and a 183 SESSION PROGRESS message 714 (FIG. 7) to the UE device 102 via the CN 112 and RAN 110.

At block 410, the UE device 102, in one configuration, determines whether or not to start a QoS reservation timer 716 (FIG. 7) after (or in response to) receiving the 183 SESSION PROGRESS message 714. For example, at block 412, the UE device 102 starts the QoS reservation timer 716 if the 183 SESSION PROGRESS message includes an SDP answer having one or more SDP parameters that grant the QoS requirement requested by the UE device 102. Examples of the SDP parameter(s) include "Require: precondition", "a=curr.qos local sendrecv", "a=curr.qos remote sendrecv", "a=des.qos mandatory local sendrecv" and/or "a=des.qos mandatory remote sendrecv". In one or more embodiments, the UE device 102 sets the QoS reservation timer 716 to a different expiration time/value when performing an IMS service 706 in a different public land mobile network (PLMN). For example, the UE device 102 sets the QoS reservation timer 716 to a first value (e.g., 8 seconds) when the UE device 102 operates with a first PLMN and sets the QoS reservation timer 716 to a second value (e.g., 20 seconds) when the UE device 102 operates with a second PLMN. The QoS reservation timer 716 typically expires if the precondition specified by the UE device 102 in the INVITE message 710 is not met, e.g., a dedicated QoS bearer for media is not available or is incorrect, and the dedicated QoS bearer is not set by the network, and so on. Upon timer expiration, the UE device 102 or RAN 110 releases the IMS service call 706 by sending a SIP CANCEL/BYE message. At block 414, if the 183 SESSION PROGRESS 714 message does not include an SDP answer with one or more SDP parameters that grant the QoS requirement, the UE device 102 does not start the QoS reservation timer 716. By not starting the QoS reservation timer 716, the UE device 102 prevents the IMS service 706 from being dropped due to the timer 716 expiring in response to the appropriate QoS configuration(s) not being provided.

At block 416, after receiving the SIP acknowledgment message from the IMS network 126 (e.g., the 183 SESSION PROGRESS message 714), the UE device 102 sends a PROVISIONAL RESPONSE ACKNOWLEDGEMENT (PRACK) message 718 (FIG. 7) to the IMS network 126 via the RAN 110 and CN 112. At block 418, in response to sending the PRACK message 718, the UE device 102 receives one or more SIP messages from the IMS network 126 indicating that the IMS service 408 has been established. For example, the IMS network 126 sends a 180 RINGING message 720 (FIG. 7) and a 200 OK message 722 (FIG. 7) to the UE device 102 via the RAN 110 and CN 112. The 200 OK message 722 is for responding to the INVITE message 710. In one or more embodiments, the UE device 102 sends another PRACK message 724 (FIG. 7) to the IMS network 126 via the RAN 110 and CN 112 to acknowledge reception of the OK message 722.

At block 420, in response to the IMS service 706 being established with the IMS network 126, as indicated by receiving the 180 RINGING message 720 or the 200 OK message 722, the UE device 102 determines if a dedicated DRB has been configured by the RAN 110 for the IMS service 706. For example, the UE device 102 determines if a second DRB configuration has been received from the RAN 110 to configure a dedicated DRB for communicating IMS service packets with the RAN 110. If a dedicated DRB has been configured for the IMS service 706, the UE device 102 transmits the IMS service packets (e.g., voice, video, or voice and video) over the dedicated DRB at block 422. However, if the dedicated DRB has not been configured for the IMS service 706, the UE device 102, at block 424, stops one or more active timers 726 (FIG. 7), such as the QoS reservation timer 716, a Media Inactivity timer, or an INVITE timer, that would result in the IMS service 706 being dropped due to the dedicated DRB not being configured.

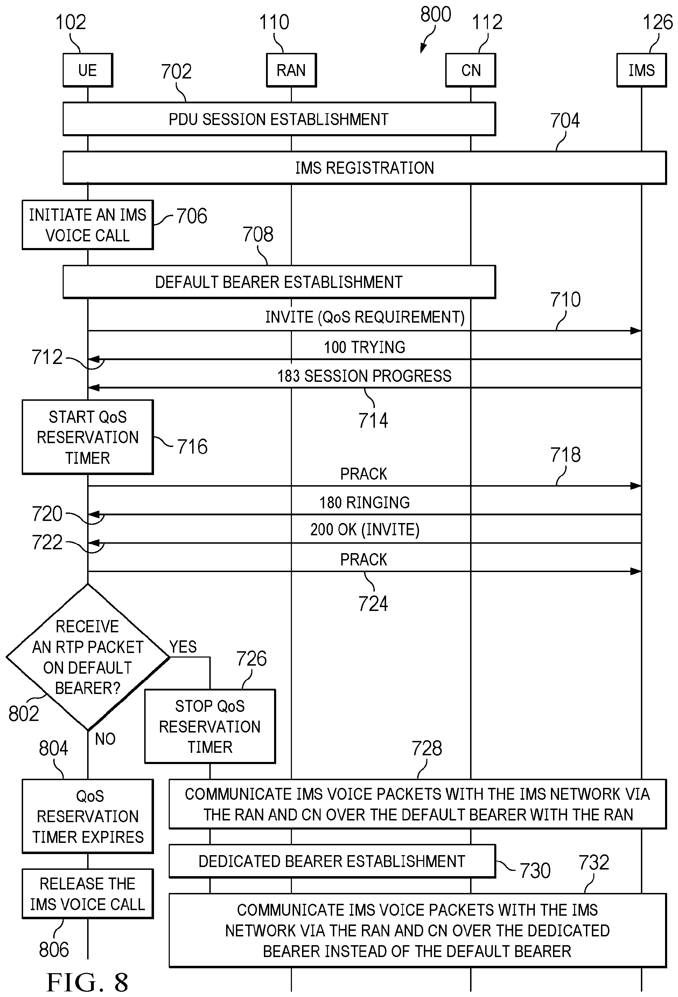

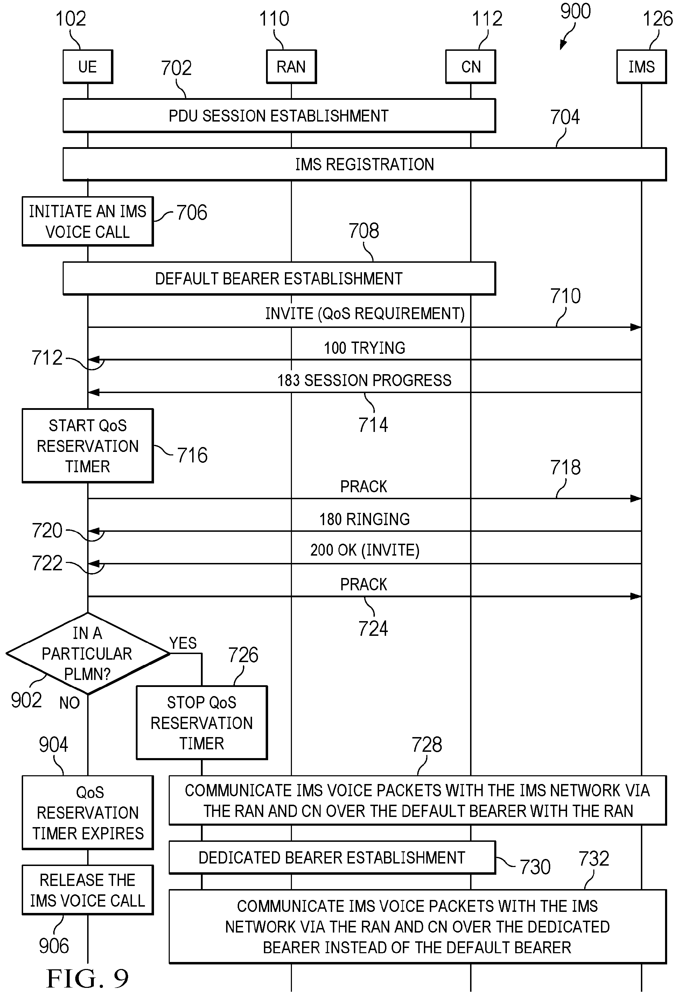

In one configuration, prior to stopping one or more active timers 726, the UE device 102 first determines 802 (FIG. 8) if one or more DL real-time transport/real-time transport control protocol (RTP/RTCP) packets have been received from the RAN 110 / CN 112 over the default DRB. If DL RTP/RTCP packets have not been received within a time threshold, a timer, such as the QoS reservation timer 716, eventually expires 804 and the UE device 102 releases 806 the IMS service 706. However, if DL RTP/RTCP packets have been received, the UE device 102 stops the one or more active timers (e.g., QoS reservation timer 716, Media Inactivity timer, or INVITE timer). In another configuration, prior to stopping one or more active timers 726, the UE device 102 first determines 902 (FIG. 9) if it is in a particular PLMN. If the UE device 102 is not in a particular PLMN, a timer, such as the QoS reservation timer 716, eventually expires 904 and the UE device 102 releases 906 the IMS service 706. However, if the UE device 102 is in the particular PLMN, the UE device 102 stops the one or more active timers (e.g., QoS reservation timer 716, Media Inactivity timer, or INVITE timer).

At block 426, the UE device 102 transmits/receives 728 (FIG. 7) IMS service packets over the default DRB with the RAN 110. For example, the UE sends uplink (UL) RTP/RTCP packets over the default DRB through the RAN/CN, and the UE receives downlink (DL) RTP/RTCP packets from the RAN/CN over the default DRB. Thus, the UE device 102 retains the IMS service 706 and avoids a service drop due to no dedicated resource being configured for the IMS service 706. Later in time, the CN 112, in one or more embodiments, performs a dedicated bearer establishment procedure 730 (FIG. 7) with the RAN 110 and UE device 102 to provide better QoS transport services for IMS service packets of the IMS service 706 such that the UE device 102 subsequently communicates 732 the IMS service packets with the RAN 110 via the dedicated DRB instead of the default DRB. The UE device 102 is configured to release the IMS call using typical procedures after the IMS service 706 has ended.

FIG. 5 shows another configuration of the method 400 described above with respect to FIG. 4. In this configuration, after the UE device 102 determines at block 420 of FIG. 4 that a dedicated bearer for the IMS service 706 has not been configured (and after any active timers have been stopped), the UE device 102, at block 502, determines if the IMS service 706 is a voice service or a video service. At block 504, if the IMS service 706 is a video service, the UE device 102 releases the IMS service 706. Alternatively, the UE device 102 downgrades the video service to a voice service. For example, the UE device 102 communicates IMS voice packets associated with the video service over the default DRB and refrains from transmitting IMS video packets associated with the IMS video service. In another example, the UE device 102 communicates IMS voice packets and IMS video packets associated with the IMS video service over the default DRB. If the UE device 102 determines that the IMS service 706 is a voice service, the UE device 102, at block 506, communicates the IMS voice packets over the default DRB.

FIG. 6 illustrates yet another configuration for the method 400 described above with respect to FIG. 4. In this configuration, after the UE device 102 receives the SIP acknowledgment message from the IMS network 126 at block 408 and before determining if a dedicated DRB has been configured for the IMS service 706 at block 420, the UE device 102, at block 602, first determines if the SIP message (e.g., 183 SESSION PROGRESS Message 714) received from the IMS network 126 grants the requested QoS configuration. If the SIP message received from the IMS network does not grant the requested QoS configuration, the UE device 102 transmits IMS service packets over the default DRB at block 426. However, if the SIP message 714 received from the IMS network 126 does grant the requested QoS configuration, then the UE device 102, at block 420, determines if a dedicated DRB has been configured for the IMS service 706. If a dedicated DRB has been configured for the IMS service 706, the UE device 102 transmits IMS service packets over the dedicated DRB(s) at block 422. However, if a dedicated DRB has not been configured for the IMS service 706, the UE device 102, at block 604, refrains from transmitting IMS service packets over the default DRB at block 422 and waits for the RAN 110 to configure one or more dedicated DRBs for the IMS service 706.

It is understood that the techniques describe above with respect to FIG. 4 to FIG. 9 are also applicable to an MT UE. However, instead of the UE device 102 sending the INVITE message 710, the first PRACK message 718, and the second PRACK message 724, the IMS network 126 sends these messages to the UE device 102. Also, instead of the IMS network 126 sending the 100 TRYING message 712, the 183 SESSION PROGRESS 714 message, and the 180 RINGING message 720, and the 200 OK message 722, the UE device 102 sends these messages to the IMS network 126.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method for establishing Internet Protocol Multimedia Subsystem, IMS, services (706) at a user equipment, UE, device (102), the method comprising:
initiating (402) an IMS service (706) with an IMS network (126);
responsive to initiating the IMS service (706), sending (406), over a default data radio bearer, a session initiation protocol, SIP, INVITE message (710) to the IMS network (126) specifying one or more preconditions for establishing the IMS service (706) over a dedicated data radio bearer (730); and
selectively transmitting (422) one or more service packets (728) for the IMS service (706) over the dedicated data radio bearer (730) responsive to at least one of the one or more preconditions having been satisfied or over the default data radio bearer (708) responsive to at least one of the one or more preconditions having not been satisfied.

2. The method of claim 1, wherein the one or more preconditions request that the dedicated data radio bearer (730) be configured for the IMS service (706).

3. The method of claim 1 or claim 2, wherein the one or more preconditions further indicate at least one quality of service configuration for the IMS service (706).

4. The method of any one of claims 1 to 3, wherein transmitting the one or more service packets (728) for the IMS service (706) over the default data radio bearer (708) comprises:
determining that the IMS service (706) is a video call using both voice packets and video packets;
transmitting the voice packets over the default data radio bearer (708); and
refraining from transmitting the video packets over the default data radio bearer (708).

5. The method of any one of claims 1 to 4, further comprising:
starting one or more timers (716) associated with the at least one of the one or more preconditions, wherein responsive to expiration of at least one of the one or more timers (716) the IMS service (706) is released; and
responsive to determining that at least one of the one or more preconditions has not been satisfied, stopping the one or more timers (716).

6. The method of claim 5, wherein the one or more timers (716) include at least one of a quality of service timer, a media inactivity timer, a dedicated data radio bearer configuration timer, or a combination thereof.

7. The method of claim 5, further comprising setting the one or more timers (716) to a first expiration time if the UE device (102) is operating in a first public land mobile network and setting the one or more timers to a second expiration time if the UE device (102) is operating in a second public land mobile network, wherein the second expiration time is different than the first expiration time and the second public land mobile network is different than the first public land mobile network.

8. The method of any one of claims 1 to 7, wherein determining that at least one of the one or more preconditions has not been satisfied comprises determining that at least one quality of service requirement specified in the one or more preconditions has not been granted, and
the method further comprises refraining from starting a quality of service timer responsive to determining that the at least one quality of service requirement has not been granted.

9. The method of any one of claims 1 to 8, further comprising:
determining that one or more real-time transport packets have not been received over the default radio data bearer (708) within a time threshold; and
responsive to determining that the one or more real-time transport packets have not been received over the default radio data bearer (708) within the time threshold, maintaining one or more active timers (716) associated with the at least one of the one or more preconditions.

10. The method of any one of claims 1 to 8, further comprising:
determining that one or more real-time transport packets have been received over the default radio data bearer (708) within a time threshold; and
responsive to determining that the one or more real-time transport packets have been received over the default radio data bearer (708) within the time threshold, stopping one or more active timers (716) associated with the at least one of the one or more preconditions.

11. The method of any one of claims 1 to 8, further comprising:
determining if the UE device (102) is operating within a given public land mobile network; and
responsive to determining that the UE device (102) is not operating within the given public land mobile network, maintaining one or more active timers (716) associated with the at least one of the one or more preconditions.

12. The method of any one of claims 1 to 8, further comprising:
determining if the UE device (102) is operating within a given public land mobile network; and
responsive to determining that the UE device (102) is operating within the given public land mobile network, stopping one or more active timers associated with the at least one of the one or more preconditions.

13. A user equipment device (102), comprising:
one or more radio frequency, RF, modems (306) configured to wirelessly communicate with at least one network (100);
one or more processors (310) coupled to the one or more RF modems (306); and
at least one memory (312) storing executable instructions, the executable instructions configured to manipulate at least one of the one or more processors (310) or the one or more RF modems (306) to perform the method of any of the preceding claims.

14. A computer-readable storage medium (312) embodying a set of executable instructions, the set of executable instructions to manipulate a user equipment device (102) to perform the method of any of claims 1 to 12.

## Patentansprüche

1. Verfahren zum Herstellen von Internetprotokoll-Multimedia-Subsystem, IMS, Diensten (706) an einem Benutzerausrüstungsgerät, UE-Gerät (102), wobei das Verfahren Folgendes umfasst:
Initiieren (402) eines IMS-Dienstes (706) mit einem IMS-Netzwerk (126);
als Reaktion auf das Initiieren des IMS-Dienstes (706), Senden (406), über einen Standard-Funkdatenträger, einer Sitzungsinitiierungsprotokoll, SIP, INVITE-Nachricht (710) an das IMS-Netzwerk (126), die eine oder mehrere Vorbedingungen zum Herstellen des IMS-Dienstes (706) über einen dedizierten Datenfunkträger (730) definiert; und
selektives Übertragen (422) eines oder mehrerer Dienstpakete (728) für den IMS-Dienst (706) über den dedizierten Datenfunkträger (730) als Reaktion auf das Erfülltsein mindestens einer der einen oder mehreren Vorbedingungen oder über den Standard-Funkdatenträger (708) als Reaktion auf das Nichterfülltsein mindestens einer der einen oder mehreren Vorbedingungen.

2. Verfahren nach Anspruch 1, wobei die eine oder mehreren Vorbedingungen anfordern, dass der dedizierte Datenfunkträger (730) für den IMS-Dienst (706) konfiguriert wird.

3. Verfahren nach Anspruch 1 oder 2, wobei die eine oder mehreren Vorbedingungen ferner mindestens eine Dienstgütekonfiguration für den IMS-Dienst (706) anzeigen.

4. Verfahren nach einem der Ansprüche 1 bis 3, wobei das Übertragen des einen oder der mehreren Dienstpakete (728) für den IMS-Dienst (706) über den Standard-Funkdatenträger (708) Folgendes umfasst:
Bestimmen, dass der IMS-Dienst (706) ein Videoanruf ist, der sowohl Sprachpakete als auch Videopakete verwendet;
Übertragen der Sprachpakete über den Standard-Funkdatenträger (708); und
Unterlassen des Übertragens der Videopakete über den Standard-Funkdatenträger (708).

5. Verfahren nach einem der Ansprüche 1 bis 4, ferner umfassend:
Starten eines oder mehrerer Zeitgeber (716), die der mindestens einen der einen oder mehreren Vorbedingungen zugeordnet sind, wobei als Reaktion auf den Ablauf mindestens eines der einen oder mehreren Zeitgeber (716) der IMS-Dienst (706) freigegeben wird; und
als Reaktion auf das Bestimmen, dass mindestens eine der einen oder mehreren Vorbedingungen nicht erfüllt worden ist, Stoppen des einen oder der mehreren Zeitgeber (716).

6. Verfahren nach Anspruch 5, wobei der eine oder die mehreren Zeitgeber (716) mindestens einen Zeitgeber für die Dienstgüte, einen Zeitgeber für die Inaktivität der Medien, einen Zeitgeber für die Konfiguration des dedizierten Datenfunkträgers oder eine Kombination davon beinhalten.

7. Verfahren nach Anspruch 5, ferner umfassend Einstellen des einen oder der mehreren Zeitgeber (716) auf eine erste Ablaufzeit, wenn das UE-Gerät (102) in einem ersten öffentlichen mobilen Landnetzwerk arbeitet, und Einstellen des einen oder der mehreren Zeitgeber auf eine zweite Ablaufzeit, wenn das UE-Gerät (102) in einem zweiten öffentlichen mobilen Landnetzwerk arbeitet, wobei die zweite Ablaufzeit sich von der ersten Ablaufzeit unterscheidet und das zweite öffentliche mobile Landnetzwerk sich von dem ersten öffentlichen mobilen Landnetzwerk unterscheidet.

8. Verfahren nach einem der Ansprüche 1 bis 7, wobei das Bestimmen, dass mindestens eine der einen oder mehreren Vorbedingungen nicht erfüllt worden ist, Bestimmen umfasst, dass mindestens eine in der einen oder den mehreren Vorbedingungen definierte Anforderung an die Dienstgüte nicht gewährt worden ist, und
das Verfahren ferner Unterlassen des Startens eines Zeitgebers für die Dienstgüte als Reaktion auf das Bestimmen umfasst, dass die mindestens eine Anforderung an die Dienstgüte nicht gewährt worden ist.

9. Verfahren nach einem der Ansprüche 1 bis 8, ferner umfassend:
Bestimmen, dass ein oder mehrere Echtzeit-Transportpakete nicht innerhalb einer Zeitschwelle über den Standard-Funkdatenträger (708) empfangen worden sind; und
als Reaktion auf das Bestimmen, dass das eine oder die mehreren Echtzeit-Transportpakete nicht innerhalb der Zeitschwelle über den Standard-Funkdatenträger (708) empfangen worden sind, Aufrechterhalten eines oder mehrerer aktiver Zeitgeber (716), die der mindestens einen der einen oder mehreren Vorbedingungen zugeordnet sind.

10. Verfahren nach einem der Ansprüche 1 bis 8, ferner umfassend:
Bestimmen, dass ein oder mehrere Echtzeit-Transportpakete innerhalb einer Zeitschwelle über den Standard-Funkdatenträger (708) empfangen worden sind; und
als Reaktion auf das Bestimmen, dass das eine oder die mehreren Echtzeit-Transportpakete innerhalb der Zeitschwelle über den Standard-Funkdatenträger (708) empfangen worden sind, Stoppen eines oder mehrerer aktiver Zeitgeber (716), die der mindestens einen der einen oder mehreren Vorbedingungen zugeordnet sind.

11. Verfahren nach einem der Ansprüche 1 bis 8, ferner umfassend:
Bestimmen, ob das UE-Gerät (102) innerhalb eines gegebenen öffentlichen mobilen Landnetzwerks arbeitet; und
als Reaktion auf das Bestimmen, dass das UE-Gerät (102) nicht innerhalb des gegebenen öffentlichen mobilen Landnetzwerks arbeitet, Aufrechterhalten eines oder mehrerer aktiver Zeitgeber (716), die der mindestens einen der einen oder mehreren Vorbedingungen zugeordnet sind.

12. Verfahren nach einem der Ansprüche 1 bis 8, ferner umfassend:
Bestimmen, ob das UE-Gerät (102) innerhalb eines gegebenen öffentlichen mobilen Landnetzwerks arbeitet; und
als Reaktion auf das Bestimmen, dass das UE-Gerät (102) innerhalb des gegebenen öffentlichen mobilen Landnetzwerks arbeitet, Stoppen eines oder mehrerer aktiver Zeitgeber, die der mindestens einen der einen oder mehreren Vorbedingungen zugeordnet sind.

13. Benutzerausrüstungsgerät (102), umfassend:
ein oder mehrere Funkfrequenz (radio frequency, RF), Modems (306), die konfiguriert sind, um drahtlos mit mindestens einem Netzwerk (100) zu kommunizieren;
ein oder mehrere Prozessoren (310), die mit dem einen oder den mehreren RF-Modems (306) gekoppelt sind; und
mindestens ein Speicher (312), der ausführbare Anweisungen speichert, wobei die ausführbaren Anweisungen konfiguriert sind, um mindestens einen des einen oder der mehreren Prozessoren (310) oder des einen oder der mehreren RF-Modems (306) zu manipulieren, um das Verfahren nach einem der vorhergehenden Ansprüche durchzuführen.

14. Computerlesbares Speichermedium (312), das einen Satz ausführbarer Anweisungen verkörpert, wobei der Satz ausführbarer Anweisungen ein Benutzerausrüstungsgerät (102) manipuliert, um das Verfahren nach einem der Ansprüche 1 bis 12 durchzuführen.

## Revendications

1. Procédé d'établissement des services de sous-système multimédia de protocole Internet, IMS, (706) sur un dispositif d'équipement utilisateur, UE, (102), le procédé comprenant :
le lancement (402) d'un service IMS (706) avec un réseau IMS (126) ;
en réponse au lancement du service IMS (706), l'envoi (406), sur un support radio de données par défaut, d'un message INVITE (710) de protocole d'initiation de session, SIP, au réseau IMS (126) spécifiant une ou plusieurs conditions préalables à l'établissement du service IMS (706) sur un support radio de données dédié (730) ; et
la transmission sélective (422) d'un ou de plusieurs paquets de service (728) pour le service IMS (706) sur le support radio de données dédié (730) en réponse à au moins l'une des une ou plusieurs conditions préalables ayant été satisfaite ou sur le support radio de données par défaut (708) en réponse à au moins l'une des une ou plusieurs conditions préalables n'ayant pas été satisfaite.

2. Procédé selon la revendication 1, dans lequel les une ou plusieurs conditions préalables exigent que le support radio de données dédié (730) soit configuré pour le service IMS (706).

3. Procédé selon la revendication 1 ou la revendication 2, dans lequel les une ou plusieurs conditions préalables indiquent également au moins une configuration de qualité de service pour le service IMS (706).

4. Procédé selon l'une quelconque des revendications 1 à 3, dans lequel la transmission des un ou plusieurs paquets de service (728) pour le service IMS (706) sur le support radio de données par défaut (708) comprend :
la détermination que le service IMS (706) est un appel vidéo à l'aide à la fois des paquets vocaux et des paquets vidéo ;
la transmission des paquets vocaux sur le support radio de données par défaut (708) ; et
le fait de s'abstenir de transmettre des paquets vidéo sur le support radio de données par défaut (708).

5. Procédé selon l'une quelconque des revendications 1 à 4, comprenant également :
le démarrage d'un ou de plusieurs temporisateurs (716) associés à l'au moins l'une des une ou plusieurs conditions préalables, dans lequel, en réponse à l'expiration d'au moins l'un des un ou plusieurs temporisateurs (716), le service IMS (706) est libéré ; et
en réponse à la détermination qu'au moins l'une des une ou plusieurs conditions préalables n'a pas été satisfaite, le fait d'arrêter les un ou plusieurs temporisateurs (716).

6. Procédé selon la revendication 5, dans lequel les un ou plusieurs temporisateurs (716) comportent au moins l'un d'un temporisateur de qualité de service, d'un temporisateur d'inactivité du support, d'un temporisateur de configuration de support radio de données dédié ou d'une combinaison de ceux-ci.

7. Procédé selon la revendication 5, comprenant également le réglage des un ou plusieurs temporisateurs (716) sur une première durée d'expiration si le dispositif UE (102) fonctionne dans un premier réseau mobile terrestre public et le réglage des un ou plusieurs temporisateurs sur une seconde durée d'expiration si le dispositif UE (102) fonctionne dans un second réseau mobile terrestre public, dans lequel la seconde durée d'expiration est différente de la première durée d'expiration et le second réseau mobile terrestre public est différent du premier réseau mobile terrestre public.

8. Procédé selon l'une quelconque des revendications 1 à 7, dans lequel la détermination qu'au moins l'une des une ou plusieurs conditions préalables n'a pas été satisfaite comprend la détermination qu'au moins une exigence de qualité de service spécifiée dans les une ou plusieurs conditions préalables n'a pas été respectée, et
le procédé comprend également le fait de s'abstenir de démarrer un temporisateur de qualité de service en réponse à la détermination que l'au moins une exigence de qualité de service n'a pas été respectée.

9. Procédé selon l'une quelconque des revendications 1 à 8, comprenant également :
la détermination qu'un ou plusieurs paquets de transport en temps réel n'ont pas été reçus sur le support de données radio par défaut (708) dans une durée seuil ; et
en réponse à la détermination que les un ou plusieurs paquets de transport en temps réel n'ont pas été reçus sur le support de données radio par défaut (708) dans la durée seuil, le maintien d'un ou de plusieurs temporisateurs actifs (716) associés à l'au moins l'une des une ou plusieurs conditions préalables.

10. Procédé selon l'une quelconque des revendications 1 à 8, comprenant également :
la détermination qu'un ou plusieurs paquets de transport en temps réel ont été reçus sur le support de données radio par défaut (708) dans une durée seuil ; et
en réponse à la détermination que les un ou plusieurs paquets de transport en temps réel ont été reçus sur le support de données radio par défaut (708) dans la durée seuil, le fait d'arrêter un ou plusieurs temporisateurs actifs (716) associés à l'au moins l'une des une ou plusieurs conditions préalables.

11. Procédé selon l'une quelconque des revendications 1 à 8, comprenant également :
le fait de déterminer si le dispositif UE (102) fonctionne dans un réseau mobile terrestre public donné ; et
en réponse à la détermination que le dispositif UE (102) ne fonctionne pas dans le réseau mobile terrestre public donné, le maintien d'un ou de plusieurs temporisateurs actifs (716) associés à l'au moins l'une des une ou plusieurs conditions préalables.

12. Procédé selon l'une quelconque des revendications 1 à 8, comprenant également :
le fait de déterminer si le dispositif UE (102) fonctionne dans un réseau mobile terrestre public donné ; et
en réponse à la détermination que le dispositif UE (102) fonctionne dans le réseau mobile terrestre public donné, le fait d'arrêter un ou plusieurs temporisateurs actifs associés à l'au moins l'une des une ou plusieurs conditions préalables.

13. Dispositif d'équipement utilisateur (102) comprenant:
Un ou plusieurs modems radiofréquence, RF, (306) configurés pour communiquer sans fil avec au moins un réseau (100) ;
un ou plusieurs processeurs (310) couplés aux un ou plusieurs modems RF (306) ; et
au moins une mémoire (312) stockant des instructions exécutables, les instructions exécutables étant configurées pour manipuler au moins l'un des un ou plusieurs processeurs (310) ou des un ou plusieurs modems RF (306) pour réaliser le procédé selon l'une quelconque des revendications précédentes.

14. Support de stockage lisible par ordinateur (312) incorporant un ensemble d'instructions exécutables, l'ensemble d'instructions exécutables permettant de manipuler un dispositif d'équipement utilisateur (102) pour réaliser le procédé selon l'une quelconque des revendications 1 à 12.
